# FASCICULE DE BREVET EUROPEEN

(11) **EP 0 533 548 B1**
(45) Date de publication et mention de la délivrance du brevet: **21.06.1995**
(21) Numéro de dépôt: 92402514.1
(22) Date de dépôt: 14.09.1992
(51) Int. Cl.: C02F 1/48

(54) **Dispositif anti-tarte magnétique**
Magnetische Entkalkungsvorrichtung
Magnetic descaling device

(30) Priorité: 18.09.1991 FR 9111471
(43) Date de publication de la demande: 24.03.1993
(73) Titulaire: Angué Lesforgettes, Christian, F-75007 Paris (FR)
(72) Inventeur: Angué Lesforgettes, Christian, F-75007 Paris (FR)

(56) Documents cités:
- DE-U- 9 102 938
- US-A- 4 367 143
- US-A- 4 888 113
- US-A- 4 946 590

## Description

L'invention se rapporte à un dispositif anti-tartre, destiné à éviter ou, tout au moins, à grandement minimiser la formation d'un dépôt de tartre, sur les parois des canalisations petites et moyennes des immeubles. Ces canalisations qui transportent différentes eaux plus ou moins minéralisées (eau potable, eau de chauffage, eaux usées) subissent un entartrage progressif, à l'encontre duquel divers types de moyens ont été utilisés.

Les dispositifs concernés par la présente invention sont du type magnétique et comprennent des aimants puissants, adaptés à être disposés autour d'une canalisation, afin de créer le long de l'axe d'un tronçon de cette canalisation, un champ magnétique élevé ayant une polarité déterminée. Ce type de dispositifs est l'aboutissement de développements qui ont débuté d'une manière empirique, il y a une quarantaine d'années. Sous l'effet du champ magnétique de l'une ou l'autre polarité (mais de préférence de la polarité Sud) ainsi engendré par ces dispositifs, les molécules des sels minéraux dissous dans l'eau subissent une importante réduction ou même une quasi annulation de leur propension à s'accrocher aux aspérités microscopiques de la paroi des conduits et à s'y déposer sous forme de tartre. Ce qui peut s'expliquer par une orientation forcée de ces molécules dans le sens de l'écoulement de l'eau, sous l'action du champ magnétique axial ainsi créé.

Plusieurs dispositifs de ce type sont décrits dans le brevet américain US N° 4.605.498 accordé à P.Kulish en 1986. Les résultats obtenus avec ces dispositifs sont généralement satisfaisants. Toutefois, dans le cas des dispositifs prévus pour être montés sur la plupart des canalisations petites et moyennes d'un immeuble, les architectures adoptées sont relativement complexes et, de ce fait, les coûts de fabrication de ces dispositifs particuliers sont trop élevés, ce qui en réduit notablement la diffusion.

L'objet de l'invention est un dispositif magnétique anti-tartre à la fois peu onéreux et adapté à être installé sur les canalisations de diamètres petits et moyens des immeubles.

L'objet de l'invention concerne un dispositif magnétique anti-tartre dont l'architecture est particulièrement simple et le processus de fabrication particulièrement économique.

Selon l'invention, un dispositif magnétique anti-tartre destiné à plusieurs types de conduits,
- du genre comprenant deux sous-ensembles identiques ( 10-10' ) adaptes à être fixés l'un en face de l'autre autour d'un conduit (38), chaque sous-ensemble ( 10-10' ) comportant des aimants identiques relativement puissants (14-16 et 14'-16') montés sur un support (12-12') et adaptés à créer, dans un tronçon de ce conduit, un champ magnétique axial relativement intense, d'une polarité donnée;
- est caractérisé en ce que :
- les aimants de chaque sous-ensemble (10-10') comprennent deux barreaux (14-14' et 16-16') à section rectangulaire, polarisés transversalement; dans le sens de l'épaisseur, les faces Nord de ces aimants étant de préférence appliquées sur des plateaux de montage (26-26' et 28-28')
- le support (12-12') est une pièce relativement rigide, réalisée en matériau ferromagnétique;
- le support (12-12') comporte, du milieu vers l'exterieur, les deux plateaux de montage des aimants (26-26' et 28-28') inclinés l'un par rapport à l'autre en un V trés ouvert, deux rampes d'écartement (22-22' et 24-24') et deux flancs d'assemblage (18-18' et 20-20') sensiblement coplanaires pourvus de trous d'assemblage (19-19' et 21-21');
- les dits flancs (18-18' et 20-20') étant adaptés à être montés solidaires des flancs d'un autre support identique disposé en face, au moyen de vis (40-42) engagées dans les trous (19-19' et 21-21') et associées à des écrous (44-46);
- le support (12-12') posséde une dimension transversale sensiblement égale à la longueur des aimants (14-14' et 16-16');
- les deux aimants (14-16 et 14'-16') sont, par effets magnétiques, à la fois solidaires des plateaux (26-28 et 26'-28') et repoussés dans les angles formés par les rampes (22-22',24-24') et les plateaux (26-26',28-28');
- un revêtement doué d'une résistance mécanique relativement élevée est appliqué sur chaque sous-ensemble (10-10').

Grâce à cette disposition, un dispositif magnétique anti-tartre selon l'invention, adapté à plusieurs types de conduits est particulièrement simple à fabriquer et, de ce fait, particulièrement bon marché. En effet, chacun des deux sous-ensembles identiques de ce dispositif nouveau, comprend trois éléments peu onéreux particulièrement faciles à assembler. Deux de ces éléments sont des aimants en céramique, en forme de barreaux à section rectangulaire, susceptibles d'être produits en grande série à des prix intéressants. Le troisième élément est une pièce en fer doux, facile à réaliser par emboutissage d'une plaquette rigide découpée dans une bande. Il est donc particulièrement bon marché. L'assemblage manuel de ces trois éléments est particulièrement aisé. En effet, la mise en place des aimants sur leur support est immédiate du fait (1) de l'attraction qu'ils exercent sur ce support, (2) des dimensions sensiblement identiques, respectivement longitudinale et transversale, des aimants et du support et (3) des butées d'écartement des aimants, formées par les lignes de raccord des rampes et des plateaux.

Quant au revêtement à haute résistance mécanique de chacun de ces sous-ensembles, il est obtenu par la mise en oeuvre d'une des techniques usuelles d'enrobage par résine époxy. De la sorte, entre les aimants et leur support, une liaison mécanique efficace est établie qui s'ajoute à la liaison magnétique initiale. Ce qui empêche les éléments d'un sous-ensemble du dispositif selon l'invention de se désassembler à la suite d'une chûte sur un sol dur et, bien entendu, rend aisée la manipulation de ces sous-ensembles, notamment au moment de leur mise en place autour d'une canalisation. En outre, un tel revêtement donne à ces sous-ensembles, un aspect agréable, insensible aux agressions de l'environnement auxquelles ils seront inévitablement exposés.

Pour ce qui concerne la possibilité de monter un dispositif selon l'invention autour de canalisations de diamètres différents, elle résulte du fait que chacun de ses deux sous-ensembles ne comporte que deux aimants, montés contigus ou écartés l'un de l'autre, avec des faces polaires disposées le long des branches d'un V très ouvert. Ce qui permet le montage des dispositifs anti-tartre selon l'invention, autour de la plupart des conduits petits et moyens d'un immeuble.

Les caractéristiques et avantages de l'invention apparaîtront d'une manière plus précise à la suite de la description ci-après d'une forme préférée de l'invention, donnée à titre d'exemple non limitatif, en référence au dessin annexé dans lequel:
- la figure 1 représente une vue perspective des deux sous-ensembles du dispositif anti-tartre selon l'invention;
- la figure 2 représente une vue en bout d'un dispositif anti-tartre selon l'invention, monté sur une canalisation.

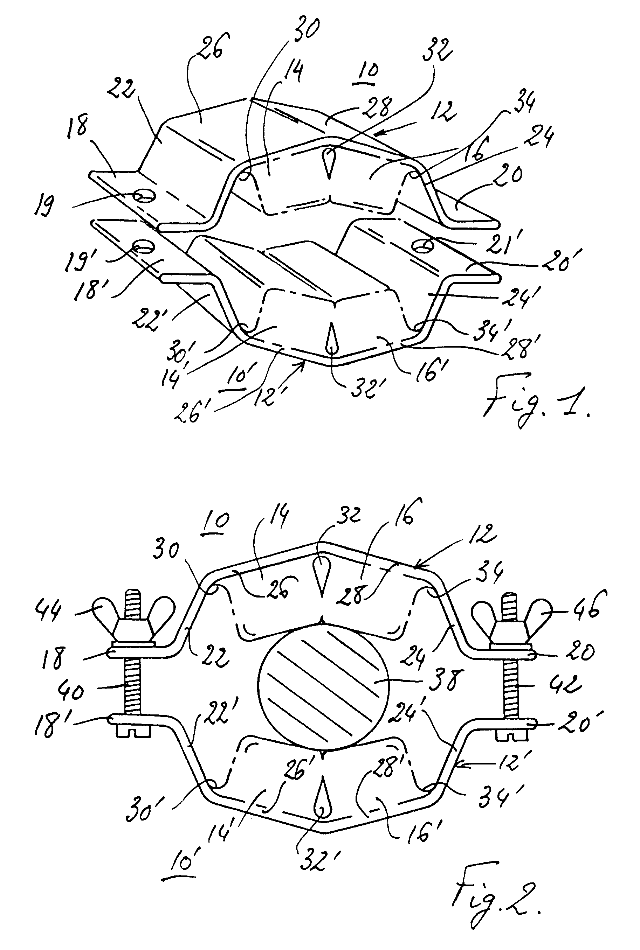

Selon les figures 1 et 2, le dispositif anti-tartre selon l'invention comporte deux sous-ensembles identiques 10 et 10′. Chaque sous-ensemble 10-10′ comprend un support rigide 12-12′, réalisé à partir d'une plaque en fer doux, et deux aimants 14-14′ et 16-16′, constitués par des barreaux à section sensiblement carrée, aimantés transversalement. Chaque support 12-12′ est symétrique par rapport à sa ligne médiane et comprend deux flancs d'assemblage sensiblement coplanaires 18-18′ et 20-20′, deux rampes d'écartement 22-22′ et 24-24′ redressées d'environ 60° par rapport aux flancs et deux plateaux de montage des aimants 26-26′ et 28-28′, formant entre eux un V ouvert de 150° environ. Dans chaque flanc 18-20 et 18′-20′ est percé un trou d'assemblage 19-21 et 19′-21′. La longueur des aimants 14-14′ et 16-16′ est sensiblement égale à la dimension transversale de chacun des supports 12-12′. Les faces Nord de ces aimants sont appliquées sur les plateaux de montage 26-26′ et 28-28′ et y adhèrent par effet magnétique. Du fait de cette disposition, les faces de même polarité Sud et Nord de chaque paire d'aimants 26-28 et 26′-28′ se repoussent les unes les autres, de telle manière que les bords longitudinaux externes des faces Nord sont en butée sur les lignes respectives de raccord des rampes 22, 24, 22′, 24′ et des plateaux 26, 28, 26′, 28′. Sur les deux figures, les bords longitudinaux internes des faces Sud des aimants paraissent représentés en contact, mais en fait, sous le revêtement, ils sont légèrement écartés l'un de l'autre, en fonction des largeurs respectives des aimants et de leurs plateaux de montage. Chaque sous-ensemble 10-10′ est pourvu d'un revêtement à haute résistance mécanique. La présence de ce revêtement fait apparaître des congés de raccordement 30-32-34 et 30′-32′-34′ sur les lignes de contact des plateaux de montage 22-24 et 22′-24′ et des bords longitudinaux des faces Nord des aimants 14-16 et 14′-16′.

Selon la figure 2, le dispositif magnétique selon l'invention est représenté monté autour d'une canalisation 38. A cet effet, deux vis à tête 40-42, munies d'écrous-papillons 44-46, sont engagées dans les trous d'assemblage 19-19′ et 21-21′ des flancs 18-18′ et 20-20′ des sous-ensembles 10-10′.

Le montage du dispositif anti-tartre selon l'invention sur une des canalisations prévues pour le recevoir comporte trois étapes. La première consiste à mettre en place dans deux trous d'assemblage 19-19′ ou 21-21′, une des vis 40 ou 42 et à engager un écrou 44 ou 46 sur cette vis, de façon à constituer deux mâchoires maintenues ouvertes par la répulsion qu'exercent l'une sur l'autre les paires de faces polaires Sud de chacun des sous-ensembles. La deuxième étape consiste à engager la canalisation entre les mâchoires ouvertes ainsi formées. La troisième étape consiste à mettre en place la seconde vis et son écrou, à serrer cet écrou jusqu'à ce que les deux mâchoires enserrent quelque peu la canalisation puis à serrer alternativement chaque écrou jusqu'à ce que le dispositif anti-tartre selon,l'invention soit fermement maintenu sur la canalisation. Celle-ci peut, bien évidemment, posséder tout diamètre compris dans une plage dont les valeurs extrêmes sont fixées par les dimensions respectives des éléments du dispositif. Dans le cas des petits conduits, leur rayon minimal dépend de l'écart séparant le plan des flancs d'assemblage et les bords longitudinaux internes des faces Sud des aimants. Dans le cas des gros conduits, leur diamètre maximal est approximativement déterminé par l'écart séparant les bords longitudinaux externes des faces Sud des aimants.

On notera qu'avec un dispositif magnétique anti-tartre selon l'invention, l'orientation du champ magnétique, créé dans le tronçon de canalisation concerné, n'est pas rigoureusement axiale puisque la répartition des faces de même polarité des aimants autour de la canalisation n'est pas uniforme. La pratique montre toutefois que cela a peu d'effet négatif sur l'efficacité du dispositif.

## Revendications

1. Dispositif magnétique anti-tartre destiné à plusieurs types de conduits.
- du genre comprenant deux sous-ensembles identiques ( 10-10' ) adaptés à être fixés l'un en face de l'autre autour d'un conduit (38), chaque sous-ensemble ( 10-10' ) comportant des aimants identiques relativement puissants (14-16 et 14'-16') montés sur un support (12-12') et adaptés à créer, dans un tronçon de ce conduit, un champ magnétique axial relativement intense, d'une polarité donnée;
- est caractérisé en ce que :
- les aimants de chaque sous-ensemble (10-10') comprennent deux barreaux (14-14' et 16-16') à section rectangulaire, polarisés transversalement; dans le sens de l'épaisseur, les faces Nord de ces aimants étant de préférence appliquées sur des plateaux de montage (26-26' et 28-28')
- le support (12-12') est une pièce relativement rigide, réalisée en matériau ferromagnétique;
- le support (12-12') comporte, du milieu vers l'exterieur, les deux plateaux de montage des aimants (26-26' et 28-28') inclinés l'un par rapport à l'autre en un V très ouvert, deux rampes d'écartement (22-22' et 24-24') et deux flancs d'assemblage (18-18' et 20-20') sensiblement coplanaires pourvus de trous d'assemblage (19-19' et 21-21');
- les dits flancs (18-18' et 20-20') étant adaptés à être montés solidaires des flancs d'un autre support identique disposé en face, au moyen de vis (40-42) engagées dans les trous (19-19' et 21-21') et associées à des écrous (44-46);
- le support (12-12') possède une dimension transversale sensiblement égale à la longueur des aimants (14-14' et 16-16');
- les deux aimants (14-16 et 14'-16') sont, par effets magnétiques, à la fois solidaires des plateaux (26-28 et 26'-28') et repoussés dans les angles formés par les rampes (22-22',24-24') et les plateaux (26-26',28-28');
- un revêtement doué d'une résistance mécanique relativement élevée est appliqué sur chaque sous-ensemble (10-10').

2. Dispositif selon la revendication 1, caractérisé en ce que le revêtement des sous-ensembles (10-10') est constitué par une couche relativement épaisse de résine époxy.

## Claims

1. Magnetic anti-scale device intended for various types of pipes.
- of the form made up of two identical sub-assemblies (10-10') which can be fixed opposite each other around a pipe (38), each sub-assembly (10-10') being made up of identical relatively powerful magnets (14-16 and 14'-16') mounted on a bracket (12-12') and capable of creating within a section of such pipe a relatively intense axial magnetic field of a given polarity;.
- being characterised by the fact that:
- the magnets of each sub-assembly (10-10') have two square section bars (14-14' and 16-16') polarized transversally; in the plane of the thickness, the north sides of these magnets being for preference affixed to mounting plates (26-26' and 28-28') ,
- the bracket (12-12') is a relatively rigid item, made of ferro-magnetic material;;
- the bracket (12-12') has from the middle towards the outside the two magnet mounting plates (26-26' and 28-28') each inclined in relation to the other in a very shallow V, two distancing ramps (22-22' and 24-24') and two assembly walls (18-18' and 20-20') in essentially the same plane and equipped with assembly holes (19-19' and 21-21');
- the said walls (18-18' and 20-20') can be fixed together with the walls of another identical bracket positioned opposite by means of screws (40-42) fixing into the holes (19-19' and 21-21') and held by nuts (44-46);
- the bracket (12-12') has a cross-section which is virtually the same as the length of the magnets (14-14' and 16-16');
- the two magnets (14-6 and 14'-16') are through the magnetic effect at the same time joined to the plates (26-28 and 26'-28') and are pushed into the angles formed by the ramps (22-22', 24-24') and the plates (26-26', 28-28');
- a cladding having a relatively high magnetic resistance is placed over each sub-assembly (10-10').

2. Device as in Claim No.1, characterized by the fact that the cladding of the two sub-assemblies (10-10') is made from a relatively thick layer of epoxy resin.

## Patentansprüche

1. Magnetische Vorrichtung gegen Kalkablagerung für mehrere Rohrarten.
- Bestehend aus zwei identischen Untergruppen (10-10'), die so gefertigt sind, daß die eine gegenüber der anderen um das Rohr (38) herum befestigt wird, wobei jede Untergruppe (10-10') identische, relativ starke Magneten umfaßt (14-16 und 14'-16'), die auf eine Halterung (12-12') montiert sind und die geeignet sind, um an einem Rohrabschnitt ein relativ starkes, axiales Magnetfeld mit bestimmter Polarität zu erzeugen.
- Sie ist dadurch gekennzeichnet, daß:
- die Magneten jeder Untergruppe (10-10') aus zwei Stäben (14-14' und 16-16') mit rechteckigem Querschnitt bestehen mit querlaufender Polarisierung; in der Richtung der Dicke sind die Nordseiten dieser Magnete vorzugsweise an den Montageplatten (26-26' und 28-28') angebracht;
- die Halterung (12-12') ein relativ steifes Teil ist, das aus einem ferromagnetischen Material gefertigt ist;
- die Halterung (12-12') von der Mitte nach außen die beiden Montageplatten der Magnete (26-26' und 28-28'), die so zueinander geneigt sind, daß sie ein sehr offenes V bilden und zwei Abstandsrampen (22-22' und 24-24') und zwei Montageflanken (18-18' und 20-20') umfassen, die ungefähr in der gleichen Ebene liegen und mit zwei Montagebohrungen (19-19' und 21-21') versehen sind;
- die Flanken (18-18' und 20-20') so beschaffen sind, daß sie fest mit den Flanken einer anderen identischen, gegenüber angebrachten Halterung mittels Schraube (40-42) befestigt werden, die durch die Bohrungen (19-19' und 21-21') geschoben und mit Muttern (44-46) festgezogen werden;
- die Halterung (12-12') eine Querbemessung besitzt, die ungefähr der Länge der Magneten (14-14' und 16-16') entspricht;
- die beiden Magneten (14-6 und 14'-16') durch Magnetwirkung mit den Platten (26-28 und 26'-28') fest verbunden sind und gleichzeitig in die Winkel, die durch die Rampen (22-22', 24-24') und die Platten (26-26', 28-28') gebildet werden, zurückgedrängt werden;
- ein Überzug mit hoher mechanischer Festigkeit auf jede Untergruppe (10-10') angebracht wird;

2. Vorrichtung laut Anspruch 1, die dadurch gekennzeichnet ist, daß der Überzug der Unterguppen (10-10') aus einer relativ dicken Epoxyharzschicht gebildet ist.
